(19) Europäisches Patentamt

European Patent Office

Office européen des brevets

(11) **EP 4 769 385 A1**

(12) **EUROPEAN PATENT APPLICATION**
published in accordance with Art. 153(4) EPC

(43) Date of publication:
01.07.2026 Bulletin 2026/27

(21) Application number: 24870091.6

(22) Date of filing: 01.08.2024

(51) International Patent Classification (IPC):
*G10K 11/178* (2006.01)    *B60R 16/037* (2006.01)

(52) Cooperative Patent Classification (CPC):
B60R 16/037; G10K 11/178

(86) International application number:
PCT/CN2024/109194

(87) International publication number:
WO 2025/066539 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 CN 202311270749

(71) Applicant: Shanghai Bigmelon Technology Co.,
Ltd.
Shanghai 201306 (CN)

(72) Inventor: HU, Yuxiang
Shanghai 201306 (CN)

(74) Representative: v. Bezold & Partner
Patentanwälte - PartG mbB
Ridlerstraße 57
80339 München (DE)

(54) **METHOD AND APPARATUS FOR CONTROLLING IN-VEHICLE NOISE, AND ELECTRONIC DEVICE AND STORAGE MEDIUM**

(57) Disclosed in the embodiments of the present disclosure are a method and apparatus for controlling in-vehicle noise, and an electronic device and a storage medium. The method comprises: acquiring a first excitation signal corresponding to an out-of-vehicle sound player; on the basis of the first excitation signal and control information corresponding to a target position inside a vehicle, determining a second excitation signal corresponding to an in-vehicle sound player; transmitting the first excitation signal to the out-of-vehicle sound player, such that the out-of-vehicle sound player plays a first sound signal; and transmitting the second excitation signal to the in-vehicle sound player, such that the in-vehicle sound player plays a second sound signal corresponding to the second excitation signal, wherein the control information is used for enabling a signal of the second sound signal at the target position to at least counteract a part of a noise signal of the first sound signal at the target position. By means of the embodiments of the present disclosure, the sound pressure level of a noise signal at a target position inside a vehicle can be reduced, thereby realizing effective control over the external noise transmitted into the vehicle, and thus facilitating an improvement in the driving comfort of a user inside the vehicle.

FIG. 2

**Description**

The present disclosure claims priority to Chinese Patent Application No. CN202311270749.3, entitled "METHOD AND APPARATUS FOR CONTROLLING IN-VEHICLE NOISE, AND ELECTRONIC DEVICE AND STORAGE MEDIUM" and filed with the China National Intellectual Property Administration on September 27, 2023, which is incorporated herein by reference in its entirety.

**TECHNICAL FIELD**

The present disclosure relates to signal processing technologies, and in particular, to a method and an apparatus for controlling in-vehicle noise, and an electronic device and a storage medium.

**BACKGROUND**

An AVAS (Acoustic Vehicle Alerting System) of an electric vehicle emits an alert sound outward when the electric vehicle is traveling at a low speed, so as to alert pedestrians to their safety. According to AVAS standards, at low speeds, such as below 20 km/h (kilometers per hour), an AVAS sound volume ranges from a minimum of 56 dB(decibels) to a maximum of 75 dB. If a vehicle has poor sound insulation performance, AVAS noise transferred into the vehicle has a high sound pressure level, causing discomfort to in-vehicle users and reducing driving and riding experience of the in-vehicle users.

**SUMMARY**

Embodiments of the present disclosure provide a method and an apparatus for controlling in-vehicle noise, and an electronic device and a storage medium, which can reduce a sound pressure level of in-vehicle AVAS noise, thereby improving driving and riding comfort levels for in-vehicle users.

According to one aspect of the embodiments of the present disclosure, there is provided a method for controlling in-vehicle noise, including: acquiring a first excitation signal corresponding to an out-of-vehicle sound player; determining, based on the first excitation signal and control information corresponding to an in-vehicle target position, a second excitation signal corresponding to an in-vehicle sound player; transmitting the first excitation signal to the out-of-vehicle sound player so that the out-of-vehicle sound player plays a first sound signal corresponding to the first excitation signal; and transmitting the second excitation signal to the in-vehicle sound player so that the in-vehicle sound player plays a second sound signal corresponding to the second excitation signal, the control information being used for enabling a signal of the second sound signal at the target position to cancel at least a portion of a noise signal of the first sound signal at the target position.

According to another aspect of the embodiments of the present disclosure, there is provided an apparatus for controlling in-vehicle noise, including: an acquisition module, configured for acquiring a first excitation signal corresponding to an out-of-vehicle sound player; a first processing module, configured for determining, based on the first excitation signal and control information corresponding to an in-vehicle target position, a second excitation signal corresponding to an in-vehicle sound player; a first transmission module, configured for transmitting the first excitation signal to the out-of-vehicle sound player so that the out-of-vehicle sound player plays a first sound signal corresponding to the first excitation signal; and a second transmission module, configured for transmitting the second excitation signal to the in-vehicle sound player so that the in-vehicle sound player plays a second sound signal corresponding to the second excitation signal, the control information being used for enabling a signal of the second sound signal at the in-vehicle target position to cancel at least a portion of a noise signal of the first sound signal at the target position.

According to still another aspect of the embodiments of the present disclosure, there is provided a computer readable storage medium, on which a computer program is stored, where the computer program is used for implementing the method for controlling in-vehicle noise according to any one of the foregoing embodiments of the present disclosure.

According to yet another aspect of the embodiments of the present disclosure, there is provided an electronic device, including: a processor; and a memory, configured for storing instructions executable by the processor, where the processor is configured for reading the executable instructions from the memory, and executing the instructions to implement the method for controlling in-vehicle noise according to any one of the foregoing embodiments of the present disclosure.

According to still another aspect of the embodiments of the present disclosure, there is provided a computer program product, where when instructions in the computer program product are executed by a processor, the method for controlling in-vehicle noise according to any one of the foregoing embodiments of the present disclosure is performed.

Based on the method and the apparatus for controlling in-vehicle noise, and the electronic device and the storage medium provided in the embodiments of the present disclosure, a second excitation signal corresponding to an in-vehicle sound player may be determined based on a first excitation signal corresponding to an out-of-vehicle sound player and control information corresponding to an in-vehicle target position, and the in-vehicle sound player may be used as a secondary sound source. When the out-of-vehicle sound player plays a first sound signal corresponding to the first excitation signal, a noise signal of the first sound signal that is transferred to the in-vehicle target position may be canceled by a signal, of a second sound signal played through the in-vehicle sound player, that is transferred to the target position. This can reduce a sound pressure level of a noise signal at a target position in a vehicle, which achieves effective control of external noise entering the vehicle, thereby helping improve driving and riding comfort levels for in-vehicle users.

**BRIEF DESCRIPTION OF DRAWINGS**

FIG. 1 illustrates an exemplary application scenario of a method for controlling in-vehicle noise according to the present disclosure;

FIG. 2 is a schematic flowchart illustrating a method for controlling in-vehicle noise according to an exemplary embodiment of the present disclosure;

FIG. 3 is a schematic flowchart illustrating a method for controlling in-vehicle noise according to another exemplary embodiment of the present disclosure;

FIG. 4 is a schematic diagram illustrating a working principle of a second excitation signal according to an exemplary embodiment of the present disclosure;

FIG. 5 is a schematic flowchart illustrating a method for controlling in-vehicle noise according to still another exemplary embodiment of the present disclosure;

FIG. 6 is a schematic flowchart illustrating a method for controlling in-vehicle noise according to yet another exemplary embodiment of the present disclosure;

FIG. 7 is a schematic flowchart illustrating acquisition of a target filter coefficient according to an exemplary embodiment of the present disclosure;

FIG. 8 is a schematic diagram illustrating a principle of an active noise control algorithm according an exemplary embodiment of the present disclosure;

FIG. 9 is a schematic diagram illustrating an update principle of multi-path filter coefficients according to an exemplary embodiment of the present disclosure;

FIG. 10 is a schematic flowchart illustrating determination of a filter coefficient of a filter corresponding to a target position according to an exemplary embodiment of the present disclosure;

FIG. 11 is a schematic flowchart illustrating determination of a filter coefficient of a filter corresponding to a target position according to another exemplary embodiment of the present disclosure;

FIG. 12 is a schematic diagram illustrating an optimization principle of a fixed filter according to an exemplary embodiment of the present disclosure;

FIG. 13 is a schematic diagram illustrating an AVAS system according to an exemplary embodiment of the present disclosure;

FIG. 14 is a schematic diagram illustrating a structure of an apparatus for controlling in-vehicle noise according to an exemplary embodiment of the present disclosure;

FIG. 15 is a schematic diagram illustrating a structure of an apparatus for controlling in-vehicle noise according to another exemplary embodiment of the present disclosure;

FIG. 16 is a schematic diagram illustrating a structure of an apparatus for controlling in-vehicle noise according to still another exemplary embodiment of the present disclosure;

FIG. 17 is a schematic diagram illustrating a structure of an apparatus for controlling in-vehicle noise according to yet another exemplary embodiment of the present disclosure;

FIG. 18 is a schematic diagram illustrating a structure of an apparatus for controlling in-vehicle noise according to still another exemplary embodiment of the present disclosure;

FIG. 19 is a schematic diagram illustrating a structure of an apparatus for controlling in-vehicle noise according to yet another exemplary embodiment of the present disclosure; and

FIG. 20 is a diagram illustrating a structure of an electronic device according to an embodiment of the present disclosure.

## DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

Overview of Disclosure

In a process of implementing the present disclosure, the inventor found that an AVAS (Acoustic Vehicle Alerting System) of an electric vehicle emits an alert sound outward when the electric vehicle is traveling at a low speed, so as to alert pedestrians to their safety. According to AVAS standards, at low speeds, such as below 20 km/h (kilometers per hour), an AVAS sound volume ranges from a minimum of 56 dB(decibels) to a maximum of 75 dB. If a vehicle has poor sound insulation performance, AVAS noise transferred into the vehicle has a high sound pressure level, causing discomfort to in-vehicle users and reducing driving and riding comfort levels of the in-vehicle users.

Exemplary Overview

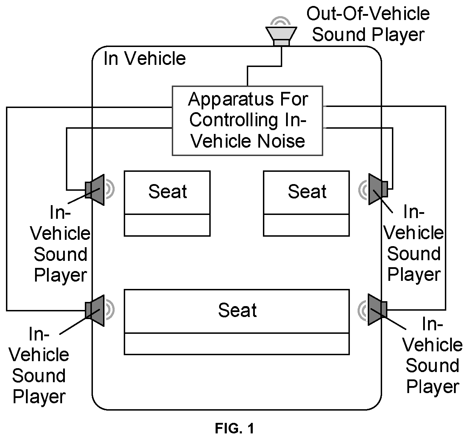

FIG. 1 illustrates an exemplary application scenario of a method for controlling in-vehicle noise according to the present disclosure.

As shown in FIG. 1, a vehicle may be provided with at least one out-of-vehicle sound player for playing, to traffic participants (such as pedestrians and cyclists) around the vehicle, an alert sound, for example, an alert sound from an AVAS system. The vehicle may also be provided with at least one in-vehicle sound player. In FIG. 1, as an example, there are four in-vehicle sound players. The in-vehicle sound player may be used for playing a relevant sound to an in-vehicle user, such as playing an entertainment program or an alert sound to the in-vehicle user. In the method (which may be performed in an apparatus for controlling in-vehicle noise) for controlling in-vehicle noise provided in the present disclosure, further, when the out-of-vehicle sound player plays an alert sound, the in-vehicle sound player may be used as a secondary sound source for canceling noise of the alert sound transferred into the vehicle from the out-of-vehicle sound player, to control a sound pressure level of in-vehicle noise, thereby improving driving and riding comfort levels of the in-vehicle user. Specifically, a first excitation signal corresponding to the out-of-vehicle sound player may be acquired. A second excitation signal corresponding to the in-vehicle sound player is determined based on the first excitation signal and control information corresponding to an in-vehicle target position. The first excitation signal is transmitted to the out-of-vehicle sound player so that the out-of-vehicle sound player plays a first sound signal corresponding to the first excitation signal. The second excitation signal is transmitted to the in-vehicle sound player so that the in-vehicle sound player plays a second sound signal corresponding to the second excitation signal. The control information is used for enabling a signal of the second sound signal at the target position to cancel at least a portion of a noise signal of the first sound signal at the target position. The target position may be set based on an actual requirement. For example, the target position may be set to be a position on top of a seat back of a user and close to an ear of the user. This can reduce a sound pressure level of a noise signal at a target position in a vehicle, which achieves effective control of external noise transferred into the vehicle, thereby helping improve driving and riding comfort levels for in-vehicle users.

The method for controlling in-vehicle noise provided in the present disclosure is not limited to being applied to control of noise transferred from an AVAS into a vehicle, but may also be applied to control of noise from any other out-of-vehicle sound player that may be transferred into the vehicle. This is not specifically limited.

Exemplary Method

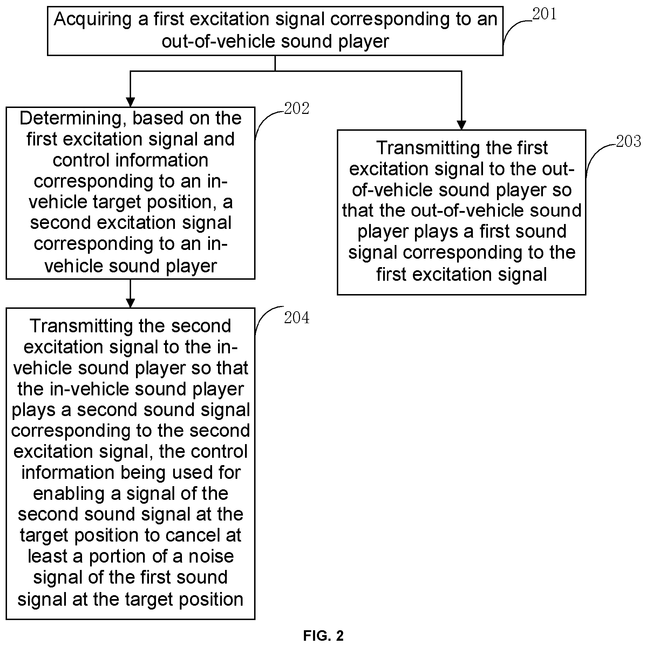

FIG. 2 is a schematic flowchart illustrating a method for controlling in-vehicle noise according to an exemplary embodiment of the present disclosure. This embodiment may be applied to an electronic device, such as an in-vehicle computing platform or a signal processing device, and as shown in FIG. 2, may include steps:
Step 201: Acquiring a first excitation signal corresponding to an out-of-vehicle sound player.

The out-of-vehicle sound player is a sound player disposed on a vehicle for interaction with traffic participants out of the vehicle. For example, the out-of-vehicle sound player may be used for playing an alert sound from an AVAS system, or playing a relevant sound of another function. The first excitation signal is an electrical signal for generating a corresponding sound signal. The out-of-vehicle sound player may convert the first excitation signal into a sound signal (which may referred to as a first sound signal) and play the sound signal. For example, the AVAS emits an alert sound outward when the vehicle is traveling at a low speed, so as to alert pedestrians to their safety.

In some optional embodiments, the first excitation signal may be acquired from a component or a device that generates the first excitation signal. For example, in the AVAS, the first excitation signal may be generated by a signal processing device (such as a signal processing chip). In this case, the first excitation signal may be acquired from the signal processing device. Alternatively, pre-configuration may be made so that, a corresponding device, after generating the first excitation signal, sends the first excitation signal to the apparatus used for implementing the method of the embodiments of the present disclosure provided in the embodiments of the present disclosure, to trigger performing of the method for controlling in-vehicle noise of the embodiments of the present disclosure. Alternatively, the apparatus provided in the embodiments of the present disclosure may be used for generating the first excitation signal, and triggering, after the generation of the first excitation signal, the method for controlling in-vehicle noise of the embodiments of the present disclosure. The manner of acquiring the first excitation signal and the manner of triggering the method of the embodiments of the present disclosure are not limited.

In some optional embodiments, the out-of-vehicle sound player may be any feasible sound playback device, such as a loudspeaker (Speaker) or a smart PA (Power Amplifier) and a speaker.

In some optional embodiments, there may be one or more out-of-vehicle sound players.

Step 202: Determining, based on the first excitation signal and control information corresponding to an in-vehicle target position, a second excitation signal corresponding to an in-vehicle sound player.

The in-vehicle target position may be set based on an in-vehicle noise control requirement, for example, based on a possible position of a head or an ear of an in-vehicle user. The control information is used for converting the first excitation signal into the second excitation signal, so that a signal, of a sound signal (which may be referred to as a second sound signal) generated corresponding to the second excitation signal, that is transferred to the target position can cancel at least a portion of a noise signal of the first sound signal transferred to the target position, to reduce a sound pressure level of noise, of the out-of-vehicle first sound signal, that is transferred to the in-vehicle target position, so that a user at the target position perceives relatively low external noise, thereby improving driving and riding comfort levels for the user.

In some optional embodiments, the target position may include one or more positions. For example, the target position may include a possible position of a head or an ear of a user corresponding to at least one seat, such as a seat top position of a driver seat, a front passenger seat, or each rear seat. This is not specifically limited.

In some optional embodiments, the control information may be pre-obtained and stored in a preset storage area, such as any storage area on the vehicle that can be directly or indirectly accessed by the apparatus of the embodiments of the present disclosure. In this case, at least one excitation signal (which may be referred to as first reference excitation signal) from the out-of-vehicle sound player may be pre-acquired, and a second reference excitation signal corresponding to the respective first reference excitation signal is generated based on initial control information. Each first reference excitation signal and the second reference excitation signal corresponding to the first reference excitation signal are used as a signal set. For each signal set, a first reference sound signal corresponding to the first reference excitation signal in the signal set is played through the out-of-vehicle sound player, and a second reference sound signal corresponding to the second reference excitation signal in the signal set is played through the in-vehicle sound player. Furthermore, an error sound signal corresponding to the signal set is collected at the target position, and further, an initial control signal is optimized based on the error sound signal corresponding to each signal set to obtain an optimized control signal, and the optimized control signal is used as a control signal corresponding to the target position for storage.

In some optional embodiments, the control information may alternatively be obtained online in real time. For example, a time frame (or referred to as a moment or a time point) corresponding to the first excitation signal is used as a current time frame. The control information may be obtained based on a previous control information corresponding to a previous time frame for the current time frame and an error sound signal corresponding to a previous first excitation signal and a previous second excitation signal at the target position. Initial control information of an initial time frame may be initialized control information, or control information pre-obtained and stored in a preset storage area.

In some optional embodiments, the control information may be a filter coefficient of a filter, for example, a filter coefficient of a fixed filter which is pre-optimized, or a filter coefficient of an adaptive filter updated online in real time. This is not specifically limited.

In some optional embodiments, for a case in which there is one out-of-vehicle sound player, one target position, and one in-vehicle sound player, the control information corresponding to the target position may include a filter coefficient of one filter.

In some optional embodiments, for a case in which there are m out-of-vehicle sound players, n target positions, and s in-vehicle sound players, at least one of m, n, and s being greater than 1, the control information corresponding to the target position may include filter coefficients of m*s filters.

Step 203: Transmitting the first excitation signal to the out-of-vehicle sound player so that the out-of-vehicle sound player plays a first sound signal corresponding to the first excitation signal.

The out-of-vehicle sound player may be connected to the apparatus of the embodiments of the present disclosure in any feasible manner, such as a wired or wireless manner. This is not specifically limited. The wired manner may refer to, for example, a connection through any bus interface. The apparatus of the embodiments of the present disclosure may transmit the first excitation signal to the out-of-vehicle sound player, and the out-of-vehicle sound player may convert the first excitation signal into a first sound signal and play the first sound signal. A working principle of the sound player is not described in detail.

Step 204: Transmitting the second excitation signal to the in-vehicle sound player so that the in-vehicle sound player plays a second sound signal corresponding to the second excitation signal, the control information being used for enabling a signal of the second sound signal at the target position to cancel at least a portion of a noise signal of the first sound signal at the target position.

The transmission of the second excitation signal is similar to that of the first excitation signal above, and a working principle of the in-vehicle sound player is similar to that of the out-of-vehicle sound player, which are not described in detail herein. Because the sound played through the out-of-vehicle sound player interacts with traffic participants out of the vehicle, the out-of-vehicle first sound signal is transferred into the vehicle if a window of the vehicle is open or the vehicle has poor sound insulation performance. For an in-vehicle user, the external sound transferred into the vehicle is noise. As a result, a signal of the first sound signal transferred to the target position is referred to as a noise signal. Because the control information is used for converting the first excitation signal into the second excitation signal to enable a signal, of a second sound signal corresponding to the second excitation signal, that is transferred to the target position to cancel at least a portion of a noise signal of the first sound signal that is transferred to the target position, a sound pressure level of noise, of the out-of-vehicle first sound signal, that is transferred to the in-vehicle target position can be reduced.

It should be noted that step 203 and step 204 above have no sequential dependency, and may be performed concurrently or sequentially, without restrictions on the performing order.

According to the method for controlling in-vehicle noise provided in this embodiment, a second excitation signal corresponding to an in-vehicle sound player may be determined based on a first excitation signal corresponding to an out-of-vehicle sound player and control information corresponding to an in-vehicle target position, where the in-vehicle sound player may be used as a secondary sound source. When the out-of-vehicle sound player plays a first sound signal corresponding to the first excitation signal, a noise signal of the first sound signal that is transferred to the in-vehicle target position may be canceled by a signal, of a second sound signal corresponding to the second excitation signal played through the in-vehicle sound player, that is transferred to the target position. This can reduce a sound pressure level of a noise signal at a target position in a vehicle, which achieves effective control of external noise transferred into the vehicle, thereby helping improve driving and riding comfort levels for in-vehicle users. Furthermore, effective interaction with traffic participants out of the vehicle can be ensured, without reducing a sound pressure level of the out-of-vehicle sound player. In addition, it may be also avoided that sound insulation performance is improved through vehicle hardware upgrades, thereby helping control costs.

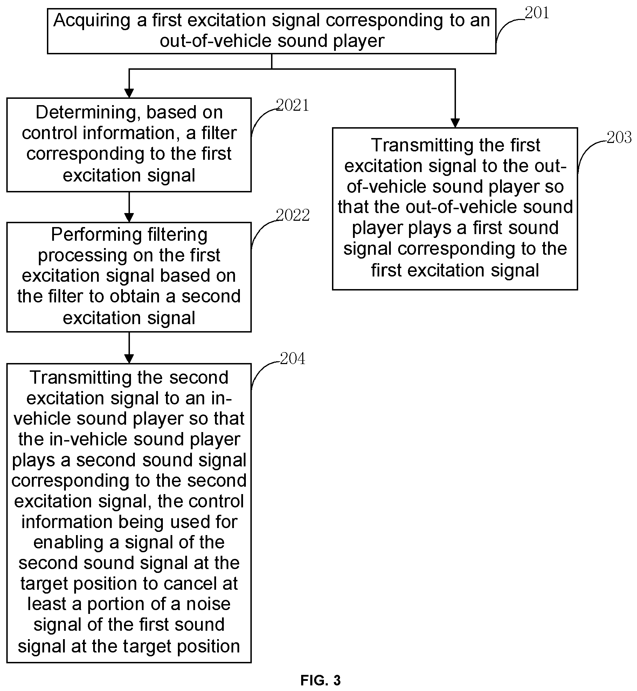

FIG. 3 is a schematic flowchart illustrating a method for controlling in-vehicle noise according to another exemplary embodiment of the present disclosure.

In some optional embodiments, as shown in FIG. 3, step 202 of determining, based on the first excitation signal and control information corresponding to an in-vehicle target position, a second excitation signal corresponding to an in-vehicle sound player includes steps:

Step 2021: Determining, based on the control information, a filter corresponding to the first excitation signal.

The control information may include a filter coefficient. The filter corresponding to the first excitation signal is determined based on the filter coefficient.

In some optional embodiments, the control information may include a pre-obtained filter coefficient of a fixed filter.

In some optional embodiments, the control information may alternatively include a filter coefficient of an adaptive filter that is determined online in real time.

In some optional embodiments, the fixed filter and the adaptive filter may be active noise control filters, that is, control filters obtained through optimization based on an active noise control algorithm.

Step 2022: Performing filtering processing on the first excitation signal based on the filter to obtain the second excitation signal.

The filtering processing may include convolving, based on a filter coefficient, the first excitation signal and a preset number of historical excitation signals preceding the first excitation signal to obtain the second excitation signal. That is, during the filtering processing, in addition to the first excitation signal, historical excitation signals preceding the first excitation signal may also be combined. For example, the first excitation signal is denoted as an excitation signal $x(n)$ at moment $n$, and the historical excitation signals are denoted as $x(n-1)$, $x(n-2)$, $x(n-3)$, ... If the filter coefficient is denoted as a vector $\boldsymbol{W} = [w_0\ w_1 \cdots w_{L_w-1}]^T$ with a length of $\boldsymbol{L_w}$, a second excitation signal $\boldsymbol{y(n)}$ at moment n may be expressed as follows:

$$\boldsymbol{y(n)} = \boldsymbol{X^T(n)W}$$

where $\boldsymbol{T}$ denotes transpose, and $\boldsymbol{X(n)} = [\boldsymbol{x(n)\,x(n-1)\ ...\ x(n-L_w+1)}]^T$. The historical excitation signal may be stored when a first excitation signal at a historical moment is acquired at the historical moment.

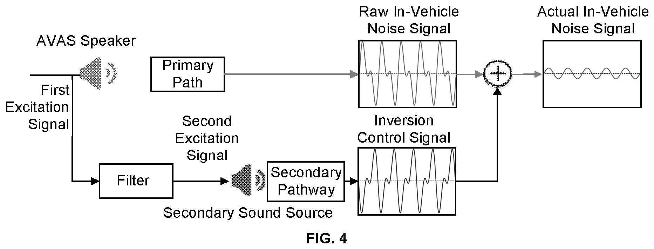

In some optional examples, FIG. 4 is a schematic diagram illustrating a working principle of a second excitation signal according to an exemplary embodiment of the present disclosure. As shown in FIG. 4, for example, an out-of-vehicle sound player is an AVAS speaker, and a secondary sound source is an in-vehicle sound player. After the filter performs filtering processing on the first excitation signal of the AVAS speaker, the second excitation signal of the secondary sound source is obtained. The AVAS plays the first sound signal corresponding to the first excitation signal. A primary path is a sound signal transfer path from the AVAS speaker to the in-vehicle target position. The first sound signal played through the AVAS speaker is transferred to the in-vehicle target position through the primary path. An raw in-vehicle noise signal represents a noise signal of the first sound signal that is transferred to the target position. A waveform graph corresponding to the raw in-vehicle noise signal in the figure represents a schematic diagram of noise signals formed by continuous first sound signals at the target position. A noise signal of a first sound signal of one moment at the target position corresponds to a value of one point on the waveform in the waveform graph. A secondary path is a sound signal transfer path from the secondary sound source to the target position. The secondary sound source plays the second sound signal corresponding to the second excitation signal. The second sound signal is transferred to the target position through the secondary path. An inversion control signal represents a signal of the second sound signal that is transferred to the target position. A waveform graph corresponding to the inversion control signal in the figure represents a schematic diagram of control signals formed by continuous second sound signals at the target position. The inversion control signal is inverted relative to the raw in-vehicle noise signal generated by the first sound signal at the target position. The waveform graphs in the figure are used to more clearly show a phase inversion status between the noise signal and the control signal at the target position, as well as a status of an actual noise signal after superimposition of both of them. The raw in-vehicle noise signal and the inversion control signal are superimposed at the target position, and due to the phase inversion between the two signals, the inversion control signal may cancel the raw in-vehicle noise signal, causing noise at the target position to become a signal shown by actual in-vehicle noise in the figure. It can be learned that a sound pressure level of the raw noise of the first sound signal from the AVAS player at the target position is effectively reduced.

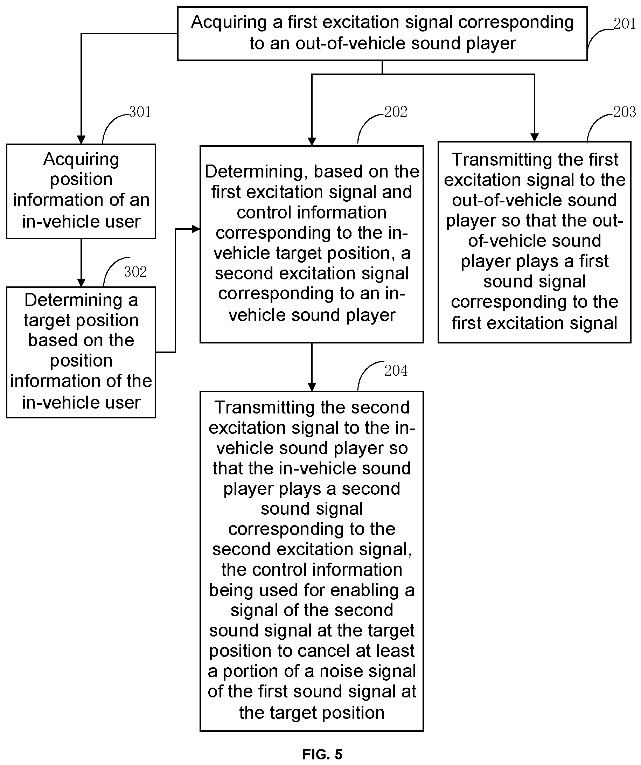

FIG. 5 is a schematic flowchart illustrating a method for controlling in-vehicle noise according to still another exemplary embodiment of the present disclosure.

In some optional embodiments, as shown in FIG. 5, the method of the embodiments of the present disclosure may further include steps:

Step 301: Acquiring position information of an in-vehicle user.
The position information of the in-vehicle user may be acquired in any feasible manner. For example, the position information of the user is acquired based on image recognition, or based on sound source localization, or based on a seat sensor.

Step 302: Determining the target position based on the position information of the in-vehicle user.

A position close to a head or an ear of the in-vehicle user may be used as the target position based on the position information of the in-vehicle user, thereby enabling control of in-vehicle noise for the in-vehicle user, to reduce targetedly a sound pressure level of external noise that the user can hear.

In some optional embodiments, for various cases with different numbers of users in the vehicle, corresponding control information may be determined respectively and stored. For example, in a case that there is only a driver, for a target position corresponding to the driver, control information corresponding to the target position is obtained and stored. For various cases that there is a driver and at least one other-seat user in the vehicle, for example, a driver and a front passenger seat user, a driver and a rear-seat user, or a driver and a front-passenger-seat user and two rear-seat users, control information respectively corresponding to the various cases is obtained and stored. Each case may be identified as one type. During traveling of the vehicle, a specific type of a target position of an in-vehicle user may be determined based on actually detected user position information, and control information corresponding to the type is obtained, for control of in-vehicle noise.

In some optional embodiments, alternatively, for various cases with different numbers of in-vehicle users, corresponding control information may be determined online in real time, to control noise at a target position corresponding to an in-vehicle user.

In some optional embodiments, the acquiring position information of an in-vehicle user may include: acquiring an image captured by an in-vehicle camera; and determining the position information of the in-vehicle user based on the image. Specifically, a user may be recognized through image recognition (such as face detection), and a position of an in-vehicle seat of the user is determined based on a position of the user in the image, and then, a preset position corresponding to the seat is used as the target position based on the seat position.

In some optional embodiments, the acquiring position information of an in-vehicle user may include: determining the position information of the in-vehicle user based on at least one of an in-vehicle image, voice, and seat sensor data.

For an image, reference may be made to the above-mentioned embodiment. For voice, the position information of the user may be determined through sound source localization. For example, a sound sensor may be disposed at at least one preset in-vehicle position. Sound information of an in-vehicle user is collected by the sound sensor, and a direction of a sound source is identified to determine position information of the user based on the direction of the sound source. A seat sensor may be a sensor disposed at the bottom of each seat, or on the back of each seat, or the like, and may be, for example, a pressure sensor or a gravity sensor, which senses changes in pressure or gravity to determine whether a user is sitting in the seat, thereby determining position information of a user.

In this embodiment, a target position is determined based on position information of an in-vehicle user, so that in-vehicle noise can be controlled for the in-vehicle user to reduce targetedly a sound pressure level of external noise that the user can hear, thereby further improving driving and riding experience of the user.

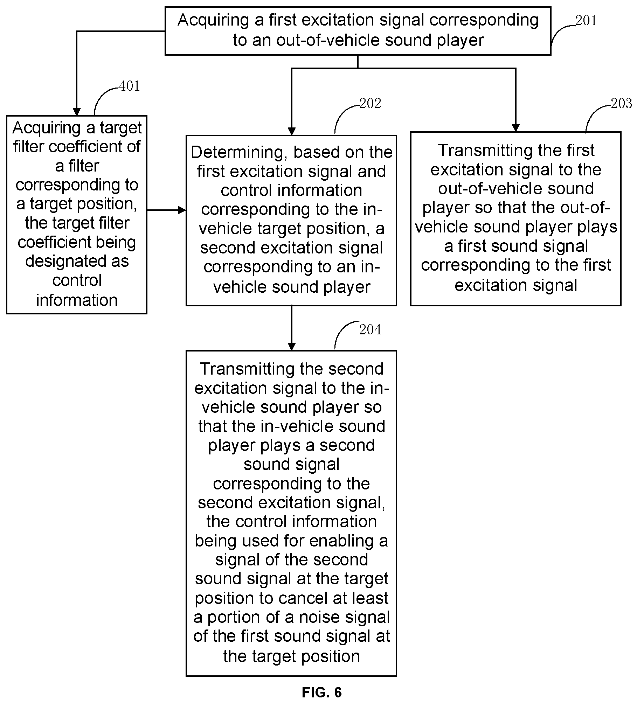

FIG. 6 is a schematic flowchart illustrating a method for controlling in-vehicle noise according to yet another exemplary embodiment of the present disclosure.

In some optional embodiments, as shown in FIG. 6, the method of the embodiments of the present disclosure further includes:

Step 401: Acquiring a target filter coefficient of a filter corresponding to the target position, the target filter coefficient being designated as the control information.

The target filter coefficient of the filter may vary as target positions vary. Therefore, for a different in-vehicle target position, a target filter coefficient of a filter corresponding to the target position may be acquired as control information, for performing filtering processing on the first excitation signal to obtain the corresponding second excitation signal. For example, if the target position includes one position, a target filter coefficient corresponding to a target position of a driver seat position may be different from a target filter coefficient corresponding to a target position of a front passenger seat. If the target position includes a plurality of positions, target filter coefficients corresponding to different combinations of positions may also differ. For example, the target position including two positions: a target position of a driver seat and a target position of a front passenger seat, a target filter coefficient for the two positions may be different from a target filter coefficient for the driver seat and a rear seat.

In this embodiment, a filter coefficient of a filter is used as control information to convert a first excitation signal into a second excitation signal, which can effectively achieve active control of noise at an in-vehicle target position. This allows for effective control of external noise transferred into the vehicle without reducing a playing sound pressure level of an out-of-vehicle sound player, and it may be avoided that sound insulation performance of the vehicle is improved through hardware upgrade, thereby helping reduce costs.

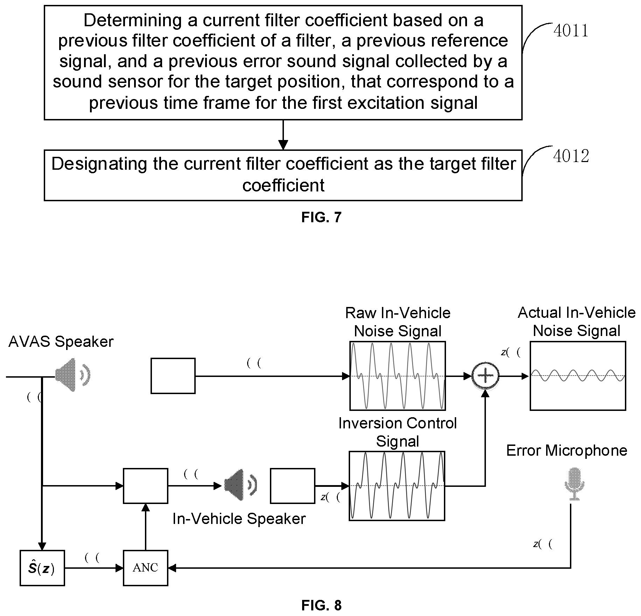

FIG. 7 is a schematic flowchart illustrating acquisition of a target filter coefficient according to an exemplary embodiment of the present disclosure.

In some optional embodiments, as shown in FIG. 7, the acquiring a target filter coefficient of a filter corresponding to the target position includes:

Step 4011: Determining a current filter coefficient based on a previous filter coefficient of a filter, a previous reference signal, and a previous error sound signal collected by a sound sensor for the target position, that correspond to a previous time frame for the first excitation signal.

The previous reference signal may be obtained based on a previous excitation signal and a secondary pathway transfer function between the in-vehicle sound player and the target position. The secondary pathway transfer function is obtained by modeling a secondary pathway between the in-vehicle sound player and the target position.

In some optional embodiments, the previous time frame is a previous moment. For example, the first excitation signal is an excitation signal $x(n)$ of a current moment (moment n). In this case, the previous excitation signal is an excitation signal $x(n-1)$ of moment n-1. Correspondingly, the previous filter coefficient is a filter coefficient determined at moment n-1. The previous reference signal is a reference signal determined at moment n-1. The previous error sound signal is an error sound signal collected at moment n-1. The secondary pathway (or secondary path) transfer function between the in-vehicle sound player and the target position is obtained by modeling an actual secondary path, and is used for sound transfer of an estimated secondary path.

In some optional embodiments, the previous reference signal may be obtained, through transformation by the secondary pathway transfer function, based on the previous excitation signal and one or more excitation signals preceding the previous excitation signal.

For example, the previous reference signal may be expressed as follows:

$$v(n-1) = X_s{}^T(n-1)\hat{S}$$

where $T$ denotes transpose, $X_s(n-1)$ denotes an excitation signal vector with a length of $L_s$, $X_s(n-1) = [x(n-1)\, x(n-2)\cdots x(n-L_s)]^T$, and $\hat{S} = [\hat{s}_0\, \hat{s}_1 \cdots \hat{s}_{L_s-1}]^T$ denotes an estimated secondary path.

In some optional embodiments, the current filter coefficient may be obtained, by using a particular adaptive algorithm, based on the previous filter coefficient, the previous reference signal, and the previous error sound signal.

Step 4012: Designating the current filter coefficient as the target filter coefficient.

In this embodiment, the current filter coefficient is determined, based on the previous filter coefficient, the previous reference signal, and the previous error sound signal, as the target filter coefficient, for filtering the current first excitation signal to obtain a second excitation signal. This achieves in-vehicle noise control based on an adaptive filter, and helps improve accuracy and effectiveness of filter coefficients, thereby further improving an effect of in-vehicle noise control.

In some optional embodiments, step 4011 of determining a current filter coefficient based on a previous filter coefficient of a filter, a previous reference signal, and a previous error sound signal collected by a sound sensor for the target position, that correspond to a previous time frame for the first excitation signal may include:

determining, by an active noise control algorithm, the current filter coefficient based on the previous filter coefficient, the previous reference signal, and the previous error sound signal.

The active noise control algorithm may be any feasible active noise control algorithm, for example, an FXLMS (Filtered-x Least Mean Square) algorithm and its series of improved algorithms (such as a normalized FXLMS algorithm). The FXLMS algorithm is an adaptive filter algorithm that can adaptively adjust a filter coefficient of a filter based on an error between an input signal and an expected output signal to achieve noise suppression.

In some optional examples, FIG. 8 is a schematic diagram illustrating a principle of an active noise control algorithm according an exemplary embodiment of the present disclosure. FIG. 8 shows a principle of adaptively optimizing a filter online in real time, that is, adaptive filter optimization. Based on FIG. 4, the secondary sound source is an in-vehicle speaker (that is, the in-vehicle sound player). $W(z)$ denotes the filter, z in $W(z)$ denotes Z-transform, n is an time index and may denotes moment n (or an nth time frame), $x(n)$ denotes a first excitation signal at moment $n$, $y(n)$ denotes a second excitation signal at moment $n$, $P(z)$ denotes a primary path, $d(n)$ denotes an raw in-vehicle noise signal, of a first sound signal at moment $n$, that is transferred to the target position through the primary path, $S(z)$ denotes an actual secondary path, $z(n)$ denotes a signal (which may be referred to as a control signal), of a second sound signal at moment n, that is transferred to the target position, and $e(n)$ denotes an error sound signal at moment $n$. An error microphone is a sound sensor for the target position for collecting an error sound signal at the target position. $\hat{S}(z)$ denotes a secondary path (that is, a secondary pathway transfer function) for modeling, and $v(n)$ denotes a reference signal at moment $n$ that is obtained based on the first excitation signal at moment $n$ and the secondary pathway transfer function. ANC (Active Noise Control) represents an active noise control algorithm for updating a filter coefficient. ANC may update a filter coefficient $W(n)$ of $W(z)$ at moment $n$ based on $v(n)$ and $e(n)$ to obtain a filter coefficient $W(n+1)$ at moment $n+1$, for generating a second excitation function at moment $n+1$. Similarly, $W(n)$ for generating $y(n)$ is obtained by updating $W(n-1)$ based on $v(n-1)$ and $e(n-1)$ at moment $n-1$. Based on this, the adaptive filter is implemented to generate the second excitation signal corresponding to the first excitation signal to effectively control external noise transferred into the vehicle.

In this embodiment, an adaptive filter is optimized online in real time through an active noise control algorithm, which helps improve accuracy of a target filter coefficient, thereby improving an effect of in-vehicle noise control.

In some optional embodiments, the determining, by an active noise control algorithm, the current filter coefficient based on the previous filter coefficient, the previous reference signal, and the previous error sound signal includes:

Updating, by a preset iteration rule, the previous filter coefficient based on the previous filter coefficient, the previous reference signal, and the previous error sound signal to obtain the current filter coefficient.

The preset iteration rule may be determined based on the active noise control algorithm. For different active noise control algorithms, iteration rules may be different.

In some optional examples, using an FXLMS algorithm as an example, the previous filter coefficient is denoted as $W(n-1) = [w_0(n-1)\, w_1(n-1)\cdots w_{L_w-1}(n-1)]^T$, the previous reference signal is denoted as $v(n-1)$, and the previous error sound signal is denoted as $e(n-1)$. In this case, the current filter coefficient $W(n)$ may be expressed as:

$$W(n) = W(n-1) - \mu V(n-1)e(n-1)$$

where $\mu$ denotes an iteration step size, $V(n-1) = [v(n-1)\, v(n-2) \cdots v(n-L_w)]^T$, $v(i)$ denotes a reference signal at moment $i$ ($i = n-1, ..., n-L_w$), and $v(i)$ is obtained at moment $i$ based on a first excitation signal $x(i)$ at moment $i$ and a secondary pathway transfer function. That is, during filter coefficient update, in addition to the previous reference signal, one or more reference signals (which may be obtained and stored at previous moments) preceding the previous reference signal may also be used to update the previous filter coefficient. A specific number of reference signals used is consistent with the length $L_w$ of the filter coefficient.

In some optional embodiments, after $W(n)$ is obtained, $x(n)$ is filtered based on $W(n)$ to obtain a second excitation signal $y(n)$, which is expressed as follows:

$$y(n) = X^T(n)W(n)$$

As shown in FIG. 8, the AVAS speaker generating a first sound signal based on $x(n)$ and playing the first sound signal, a noise signal transferred to the target position through the primary path being $d(n)$, the in-vehicle speaker playing a second sound signal corresponding to $y(n)$, and a control signal transferred to the target position through the secondary path being $z(n)$ an error sound signal at the target position is:

$$e(n) = d(n) + z(n)$$

The error microphone collects the error sound signal $e(n)$ at the target position and feeds it back to ANC. Based on $x(n)$ and the secondary pathway transfer function, the reference signal $v(n)$ is determined to be:

$$v(n) = X_s{}^T(n)\hat{S}$$

where $T$ denotes transpose, $X_s(n)$ denotes an excitation signal vector with a length of $L_s$, $X_s(n) = [x(n)\, x(n-1) \cdots x(n-L_s+1)]^T$, and $\hat{S} = [\hat{s}_0\, \hat{s}_1 \cdots \hat{s}_{L_s-1}]^T$ denotes an estimated secondary path. $L_s$ and $L_w$ may be the same or different.

ANC updates $W(n)$ based on $v(n)$ and e(n) to obtain $W(n+1)$, which is expressed as follows:

$$W(n+1) = W(n) - \mu V(n)e(n)$$

where $\mu$ denotes an iteration step size, and $V(n) = [v(n)\, v(n-1) \cdots v(n-L_w+1)]^T$. The obtained $W(n+1)$ may be used for filtering of a first excitation signal $x(n+1)$ at moment $n+1$ to obtain a second excitation signal $y(n+1)$ at moment $n+1$. By analogy, during traveling of the vehicle, accurate and effective control of out-of-vehicle noise can be achieved based on an adaptive filter.

In some optional embodiments, the iteration formula described above may be obtained by solving based on an MSE (Mean-Square Error) objective function. The MSE objective function may be expressed as follows:

$$W(n) = \underset{W(n)}{\mathrm{argmin}}\, E\{e^2(n)\}$$

where $E\{\ \}$ denotes calculation of an expectation value, and argmin denotes calculation of $W(n)$ that minimizes the expectation value. A steepest descent algorithm of the FXLMS algorithm may be used to solve the objective function to obtain the iteration formula:

$$W(n+1) = W(n) - \mu V(n)e(n)$$

In some optional embodiments, the target position includes a respective sound sensor position corresponding to at least one in-vehicle user. Step 4011 of determining a current filter coefficient based on a previous filter coefficient of a filter, a previous reference signal, and a previous error sound signal collected by a sound sensor for the target position, that correspond to a previous time frame for the first excitation signal includes:

acquiring a previous error sound signal corresponding to the respective sound sensor; and determining the current filter coefficient based on the previous filter coefficient, the previous reference signal, and the previous error sound signal corresponding to the respective sound sensor.

A corresponding sound sensor may be disposed at a position on each in-vehicle seat close to a head or an ear of a user, to collect an error sound signal at the position when the position belongs to the target position. In this case, in practice, the sound sensor position included by the target position may be determined based on the in-vehicle user, and the sound sensor at the sound sensor position included by the target position is used to collect the error sound signal. Then, the filter coefficient is updated based on the respective error sound signals corresponding to the sound sensors.

In some optional embodiments, for the case in which the target position includes at least one sound sensor position (for example, $K$ sound sensor positions), a process of updating the filter coefficient may be expressed as follows:

$$W(n-1) = [w_0(n-1) \quad w_1(n-1) \quad \cdots \quad w_{L_w-1}(n-1)]^T$$

$$X(n-1) = [x(n-1) \quad x(n-2) \quad \cdots \quad x(n-L_w)]^T$$

$$y(n-1) = X^T(n-1)W(n-1)$$

$$v_k(n-1) = X_s^T(n-1)\widehat{S}_k, \text{where } k = 1, 2, ..., K$$

$$\widehat{S}_k = [\hat{s}_{0k} \quad \hat{s}_{1k} \quad \cdots \quad \hat{s}_{(L_s-1)k}]^T$$

$$e_k(n-1) = d_k(n-1) + z_k(n-1)$$

$$W(n) = W(n-1) - \mu\sum_{k=1}^{K}V_k(n-1)e_k(n-1)$$

$$V_k(n-1) = [v_k(n-1) \quad v_k(n-2) \quad \cdots \quad v_k(n-L_w)]^T$$

where $\mu$ denotes an iteration step size, $v_k(n\text{-}1)$ denotes a reference signal corresponding to a $k$th sound sensor position in the previous reference signal, and $\widehat{S}_k$ denotes an estimated secondary path from the in-vehicle sound player to the $k$th sound sensor position. $d_k(n\text{-}1)$ denotes a noise signal of a previous first sound signal (that is, a first sound signal at moment $n\text{-}1$) at the $k$th sound sensor position. $z_k(n\text{-}1)$ denotes a control signal of a previous second sound signal at the $k$th sound sensor position. $V_k(n\text{-}1)$ denotes a previous reference signal vector corresponding to the $k$th sound sensor position.

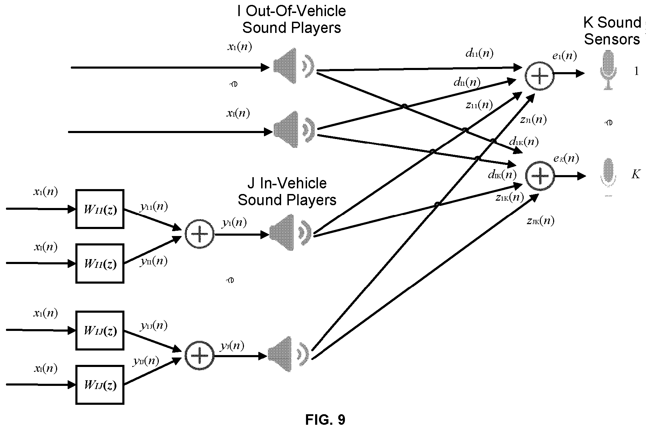

In some optional embodiments, FIG. 9 is a schematic diagram illustrating an update principle of multi-path filter coefficients according to an exemplary embodiment of the present disclosure. As shown in FIG. 9, for a case involving $I$ out-of-vehicle sound players, $J$ in-vehicle sound players, and $K$ sound sensors, where $i = 1, 2, ..., I, j = 1, 2, ...,J$, and $k = 1, 2, ..., K$, a total of $I*J$ filters are included, and each of the filters may be denoted as a filter $ij$. In this case, a process of updating a filter coefficient at moment n may be expressed as follows:

$$W_{ij}(n) = [w_{0ij}(n) \quad w_{1ij}(n) \quad \cdots \quad w_{(L_w-1)ij}(n)]^T$$

$$X_i(n) = [x_i(n) \quad x_i(n-1) \quad \cdots \quad x_i(n-L_w+1)]^T$$

$$y_j(n) = \sum_{i=1}^{I}X_i^T(n)W_{ij}(n)$$

$$v_{ijk}(n) = X_{si}^T(n)\widehat{S}_{jk}$$

$$\hat{S}_{jk} = \begin{bmatrix} \hat{s}_{0jk} & \hat{s}_{1jk} & \cdots & \hat{s}_{(L_s-1)jk} \end{bmatrix}^T$$

$$X_{si}(n) = \begin{bmatrix} x_i(n) & x_i(n-1) & \cdots & x_i(n-L_s+1) \end{bmatrix}^T$$

$$e_k(n) = d_k(n) + z_k(n)$$

$$d_k(n) = \sum_{i=1}^{I} d_{ik}(n)$$

$$z_k(n) = \sum_{j=1}^{J} z_{jk}(n)$$

$$W_{ij}(n+1) = W_{ij}(n) - \mu \sum_{k=1}^{K} V_{ijk}(n) e_k(n)$$

$$V_{ijk}(n) = \begin{bmatrix} v_{ijk}(n) & v_{ijk}(n-1) & \cdots & v_{ijk}(n-L_w+1) \end{bmatrix}^T$$

where $W_{ij}(n)$ denotes a filter coefficient corresponding to the filter $ij$ at moment $n$. $X_i(n)$ denotes an excitation signal vector with a length of $L_w$ that corresponds to an $i$th first excitation signal. $y_j(n)$ denotes a second excitation signal corresponding to a $j$th in-vehicle sound player. $\hat{S}_{jk}$ denotes an estimated secondary path between the $k$th in-vehicle sound player and the $k$th sound sensor. $X_{si}(n)$ denotes an excitation signal vector with a length of $L_s$ that corresponds to an $i$th first excitation signal. $v_{ijk}(n)$ denotes a reference signal obtained after the $i$th first excitation signal undergoes $\hat{S}_{jk}$ transform. $e_k(n)$ denotes an error sound signal collected by the $k$th sound sensor. $d_{ik}(n)$ denotes a noise signal, at the $k$th sound sensor position, of a first sound signal played through an $i$th out-of-vehicle sound player. $d_k(n)$ denotes a total noise signal from the $I$ out-of-vehicle sound players at the $k$th sound sensor position. Similarly, $z_k(n)$ denotes a total control signal from the $J$ in-vehicle sound players at the $k$th sound sensor position. $V_{ijk}(n)$ denotes a reference signal vector corresponding to the filter $ij$ at the $k$th sound sensor position.

In some optional embodiments, step 401 of acquiring a target filter coefficient of a filter corresponding to the target position may include:
designating a pre-obtained filter coefficient of the filter corresponding to the target position as the target filter coefficient.

The pre-obtained filter coefficient of the filter corresponding to the target position is a filter coefficient of a fixed filter pre-obtained through offline optimization.

In some optional embodiments, a sound sensor may be disposed at an in-vehicle target position in advance. For example, a sound sensor is temporarily disposed at the target position, and the temporarily disposed sound sensor may be removed after the filter is optimized. At least one excitation signal (which may be referred to as first reference excitation signal) is set for the out-of-vehicle sound player, and then optimization is performed on an initial filter coefficient of an initialized filter based on the at least one first reference excitation signal. After the optimization is completed, an optimized filter coefficient is used as a target filter coefficient corresponding to the target position for storage. In this case, during actual application of the vehicle, a real-time first excitation signal may be filtered based on a pre-stored target filter coefficient to obtain a second excitation signal, thereby achieving effective in-vehicle noise control.

In this embodiment, a pre-obtained filter coefficient is used as a target filter coefficient to filter a first excitation signal to generate a second excitation signal that can cancel, at a target position, an external noise signal transferred into the vehicle, thereby achieving in-vehicle noise control based on a fixed filter. Compared with the adaptive filter in the above-mentioned embodiment, the fixed filter can reduce an amount of computation for signal processing, thereby improving signal processing efficiency.

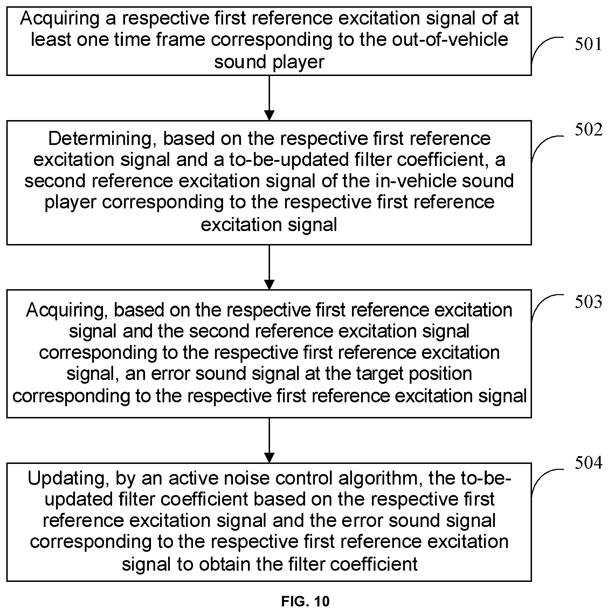

FIG. 10 is a schematic flowchart illustrating determination of a filter coefficient of a filter corresponding to a target position according to an exemplary embodiment of the present disclosure.

In some optional embodiments, as shown in FIG. 10, the filter coefficient of the filter corresponding to the target position is obtained through steps:

Step 501: Acquiring a respective first reference excitation signal of at least one time frame corresponding to the out-of-vehicle sound player.

The first reference excitation signal may be determined based on a sound signal that the out-of-vehicle sound player needs to play during actual application. Its determination principle is similar to that of the first excitation signal described above, and details are not repeated herein. A specific number of time frames included in the at least one time frame is not limited. For example, there may include 1 frame, 2 frames, 5 frames, 20 frames, or 100 frames.

Step 502: Determining, based on the respective first reference excitation signal and a to-be-updated filter coefficient, a second reference excitation signal of the in-vehicle sound player corresponding to the respective first reference excitation signal.

The to-be-updated filter coefficient may be an initialized filter coefficient or a filter coefficient that has undergone a particular number of iterations, which is not specifically limited. The determination principle of the second reference excitation signal is similar to that of the second excitation signal described above, and details are not repeated herein.

Step 503: Acquiring, based on the respective first reference excitation signal and the second reference excitation signal corresponding to the respective first reference excitation signal, an error sound signal at the target position corresponding to the respective first reference excitation signal.

For each first reference excitation signal and the second reference excitation signal corresponding to the first reference excitation signal, a first reference sound signal corresponding to the first reference excitation signal is played through the out-of-vehicle sound player of the vehicle, and a second reference sound signal corresponding to the second reference excitation signal is played through the in-vehicle sound player. Then, an error sound signal at the target position corresponding to the first reference excitation signal is collected by a sound sensor for the target position. After the collection of the error sound signal corresponding to the respective first reference excitation signal is completed, the respective first reference excitation signal and the corresponding error sound signal may be used for subsequent update of the filter coefficient.

Step 504: Updating, by an active noise control algorithm, the to-be-updated filter coefficient based on the respective first reference excitation signal and the error sound signal corresponding to the respective first reference excitation signal to obtain the filter coefficient.

The active noise control algorithm may be any feasible algorithm, for example, an FXLMS algorithm and its series of improved algorithms.

In this embodiment, at least one first reference excitation signal is collected offline, a second reference excitation signal corresponding to the respective first reference excitation signal is determined based on a to-be-updated filter coefficient, and an error sound signal at a target position corresponding to the respective first reference excitation signal is acquired for optimizing a filter coefficient by an active noise control algorithm, to obtain a filter coefficient of a fixed filter. In this way, during actual application of a vehicle, based on the filter coefficient of the fixed filter, filtering processing may be performed on a first excitation signal from an out-of-vehicle sound player to obtain a second excitation signal for canceling noise transferred from the out-of-vehicle sound player to the in-vehicle target position, thereby achieving effective in-vehicle noise control.

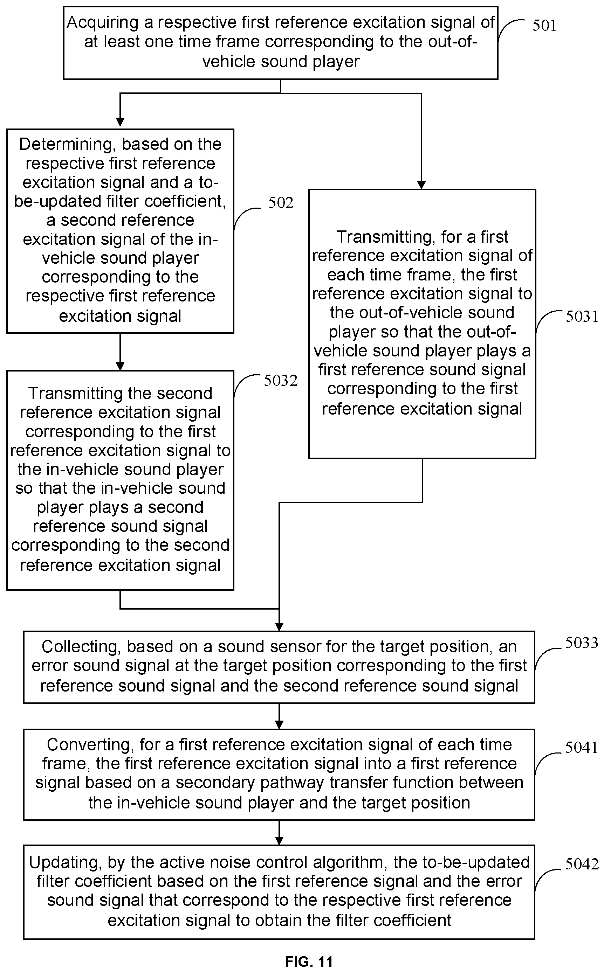

FIG. 11 is a schematic flowchart illustrating determination of a filter coefficient of a filter corresponding to a target position according to another exemplary embodiment of the present disclosure.

In some optional embodiments, as shown in FIG. 11, step 503 of acquiring, based on the respective first reference excitation signal and the second reference excitation signal corresponding to the respective first reference excitation signal, an error sound signal at the target position corresponding to the respective first reference excitation signal includes:

Step 5031: Transmitting, for a first reference excitation signal of each time frame, the first reference excitation signal to the out-of-vehicle sound player so that the out-of-vehicle sound player plays a first reference sound signal corresponding to the first reference excitation signal.

Step 5032: Transmitting the second reference excitation signal corresponding to the first reference excitation signal to the in-vehicle sound player so that the in-vehicle sound player plays a second reference sound signal corresponding to the second reference excitation signal.

It should be noted that step 5031 and step 5032 above have no sequential dependency, and may be performed concurrently or sequentially, without restrictions on the performing order.

Step 5033: Collecting, based on a sound sensor for the target position, an error sound signal at the target position corresponding to the first reference sound signal and the second reference sound signal.

It should be noted that for a specific operation principle of step 5031 to step 5033, reference may be made to the first sound signal, the second sound signal, and the error sound signal in the above-mentioned embodiment, and details are not repeated herein.

In some optional embodiments, step 504 of updating, by an active noise control algorithm, the to-be-updated filter coefficient based on the respective first reference excitation signal and the error sound signal corresponding to the respective first reference excitation signal to obtain the filter coefficient includes:

Step 5041: Converting, for a first reference excitation signal of each time frame, the first reference excitation signal into a first reference signal based on a secondary pathway transfer function between the in-vehicle sound player and the target position.

The secondary pathway transfer function is obtained by modeling a secondary pathway between the in-vehicle sound player and the target position. For a working principle of the secondary pathway transfer function, reference may be made to the above-mentioned embodiment, and details are not repeated herein.

Step 5042: Updating, by the active noise control algorithm, the to-be-updated filter coefficient based on the first reference signal and the error sound signal that correspond to the respective first reference excitation signal to obtain the filter coefficient.

The filter coefficient may be obtain by solving based on an MSE objective function. The MSE objective function of the fixed filter may be expressed as:

$$W = \operatorname*{argmin}_{W} E\{e^2(n)\}$$

where $W$ denotes the filter coefficient, and $e(n)$ denotes an error sound signal corresponding the first reference excitation signal and the second reference excitation signal at moment $n$. $\operatorname*{argmin}_{W}$ denotes calculation of a filter coefficient that minimizes an expectation value $E$ of each error sound signal, and the filter coefficient is used as the target filter coefficient corresponding to the target position for storage.

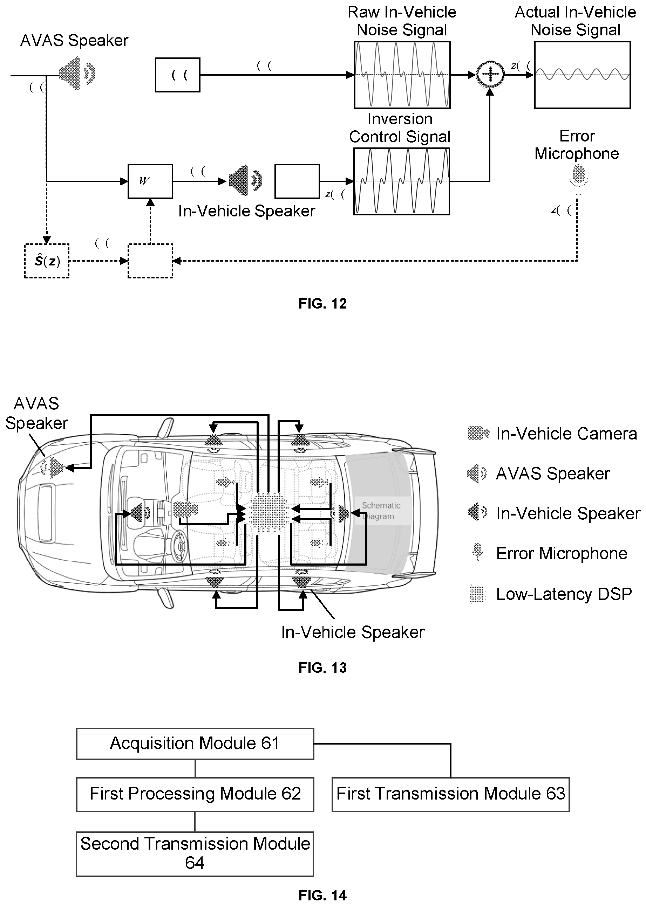

In some optional embodiments, FIG. 12 is a schematic diagram illustrating an optimization principle of a fixed filter according to an exemplary embodiment of the present disclosure. As shown in FIG. 12, dashed lines indicate offline optimization of a filter $W(z)$. $x(n)$ may denote a first reference excitation signal at moment $n$, $y(n)$ may denote a second reference excitation signal, and $d(n)$ denotes an raw in-vehicle noise signal, of a first reference sound signal at moment $n$, that is transferred to the target position through the primary path. $v(n)$ denotes a first reference signal at moment $n$ that is obtained based on the first reference excitation signal at moment $n$ and a secondary pathway transfer function, $z(n)$ denotes a control signal, of a second reference sound signal at moment $n$, that is transferred to the target position, and $e(n)$ denotes an error sound signal at the target position corresponding to $x(n)$ and $y(n)$ at moment $n$. For other symbols, reference may be made to FIG. 8 described above. ANC optimizes the filter coefficient based on $v(n)$ and $e(n)$. Based on first reference excitation signals over a period of time, a filter coefficient that minimizes the objective function is solved by the active noise control algorithm and is used as a filter coefficient of a fixed filter corresponding to the target position for storage. It can be learned that the offline optimization principle of the fixed filter is similar to that of the online adaptive optimization described above, and details are not repeated herein.

In some optional embodiments, for a case involving $I$ out-of-vehicle sound players, $J$ in-vehicle sound players, and $K$ sound sensors, there are $I*J$ fixed filters, which are obtained through offline optimization by using first reference excitation signals over a period of time. The specific principle is similar to that of the online adaptive optimization described above, and details are not repeated herein.

In this embodiment, a filter coefficient of a fixed filter is obtained through offline optimization in advance for storage. During real-time application of a vehicle, the filter coefficient of the fixed filter may be directly obtained for in-vehicle noise control. This can reduce an amount of computation for online adaptive filter updates, thereby improving signal processing efficiency.

In some optional embodiments, the acquiring a target filter coefficient in step 401 may include the above-mentioned two manners, that is, the adaptive filter manner involving step 4011 to step 4012 and the pre-obtained fixed filter manner involving step 501 to step 504. This supports both determination of a second excitation signal based on the pre-obtained fixed filter and determination of a second excitation signal based on the online adaptive filter, thereby providing a user with two noise control manners. The user may manually select a noise control manner to be specifically used, or a noise control manner to be used may be selected automatically based on a selection condition preset by the user. For example, the user may set in a manner that different noise control manners are to be used for different time periods, or different noise control manners are to be used at different vehicle speeds. For example, when the vehicle speed is higher than a particular threshold, the noise control manner based on the adaptive filter is to be used, or when the vehicle speed is lower than a particular threshold, the noise control manner based on the fixed filter is to be used. This is not specifically limited.

In some optional embodiments, there are a plurality of in-vehicle sound players. Step 202 of determining, based on the first excitation signal and control information corresponding to an in-vehicle target position, a second excitation signal corresponding to an in-vehicle sound player includes:

determining, based on the first excitation signal and control information corresponding to the respective in-vehicle sound players, second excitation signals corresponding to the respective in-vehicle sound players.

The control information corresponding to the respective in-vehicle sound players may be obtained online in real time, or may be pre-obtained offline. For example, the control information may include a filter coefficient of an adaptive filter corresponding to each of the respective in-vehicle sound players and obtained online in real time, or may include a filter coefficient of a fixed filter corresponding to each of the respective in-vehicle sound players and pre-obtained offline, which may be specifically set based on an actual requirement.

In some optional embodiments, for a case involving a plurality of in-vehicle sound players, reference may be made to the filter coefficient optimization process for a plurality of in-vehicle sound players in the above-mentioned embodiment, to obtain filter coefficients corresponding to the respective in-vehicle sound players, as control information.

In this embodiment, a plurality of in-vehicle sound players are disposed in the vehicle as secondary sound sources to cancel a noise signal transmitted from the out-of-vehicle sound player into the vehicle, thereby further improving a noise control effect at the in-vehicle target position.

In some optional embodiments, FIG. 13 is a schematic diagram illustrating an AVAS system according to an exemplary embodiment of the present disclosure. As shown in FIG. 13, an error microphone is disposed at a preset position (a position close to a head or an ear of a user) corresponding to each seat in a vehicle, to collect an error sound signal. An AVAS speaker is disposed at the front exterior of the vehicle, and six in-vehicle speakers and an in-vehicle camera are disposed in the vehicle. The AVAS speaker, the respective in-vehicle speakers, the respective error microphones, and the camera are all connected to a low-latency DSP chip, and the apparatus of the embodiments of the present disclosure is disposed in the DSP chip. During traveling of the vehicle, if low-speed traveling of the vehicle is detected, an alert sound needs to be played through the AVAS speaker. In this case, the DSP chip may generate a first excitation signal of the AVAS speaker, identify position information of an in-vehicle user through the in-vehicle camera, and then determine a target position based on the position information of the user. As an example, the target position includes four error microphone positions. In this case, target filter coefficients (including filter coefficients respectively corresponding to the six in-vehicle speakers) corresponding to the case involving the four error microphones are acquired, and filtering processing is performed on the first excitation signal based on the target filter coefficients to obtain second excitation signals (including second excitation signals corresponding to the respective in-vehicle speakers). A first sound signal corresponding to the first excitation signal is played through the AVAS speaker, and second sound signals corresponding to the second excitation signals are played through the respective in-vehicle speakers. The first sound signal is transferred to the respective error microphones through primary paths between the AVAS speaker and the respective error microphones. The respective second sound signals are transferred to the respective error microphones through their respective secondary paths. For any error microphone position, a control signal of the respective second sound signals transferred to the error microphone position may cancel a noise signal of the first sound signal transferred to the error microphone position, or cancel a portion of the noise signal. This can reduce a sound pressure level of AVAS noise that a user on each seat hears, thereby improving driving and riding experience for each user. Use of a low-latency DSP can reduce a latency in signal processing, thereby improving real-time performance of the signal processing.

In some optional embodiments, for a case in which the target position includes a plurality of (for example, K) error microphone positions, the filter coefficients be may solved based on the following objective function:

$$W(n) = \underset{W(n)}{\mathrm{argmin}} \sum_{k \in K} E\{e_k^2(n)\}$$

For meanings of respective symbols, reference may be made to the foregoing contents, and details are not repeated herein.

In some optional embodiments of the present disclosure, during traveling of the vehicle, playback duration of an out-of-vehicle sound player may be detected. In response to the playback duration being less than a time threshold, filtering processing is performed on a first excitation signal based on a pre-obtained filter coefficient corresponding to a target position to obtain a second excitation signal. In response to the playback duration being greater than the time threshold, a target filter coefficient of an adaptive filter is determined based on the manner involving step 4011 to step 4012, and filtering processing is performed on the first excitation signal based on the target filter coefficient to obtain a second excitation signal. In this case, an initial filter coefficient of the adaptive filter may be a pre-obtained filter coefficient of a fixed filter. Based on the filter coefficient of the fixed filter, noise control of the adaptive filter is subsequently achieved by updating the filter coefficient online in real time. This allows for both a low computational amount and high robustness of the fixed filter, enabling effective noise control within a short period of time. In a long term, the adaptive filter can prevent degradation in noise reduction performance caused by changes in transfer paths, thereby improving a noise reduction effect for long-term noise control.

The embodiments of the present disclosure described above may be implemented separately, or in any combination without conflict, and may be specifically set based on an actual requirement, which is not limited in the embodiments of the present disclosure.

Any one of the methods for controlling in-vehicle noise provided in the embodiments of the present disclosure may be performed by any suitable device with a data processing capability, including but not limited to: a terminal device, a server, and the like. Alternatively, any one of the methods for controlling in-vehicle noise provided in the embodiments of the present disclosure may be performed by a processor. For example, the processor performs, by calling corresponding instructions stored in a memory, any one of the methods for controlling in-vehicle noise mentioned in the embodiments of the present disclosure. This is not repeated below.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Exemplary Apparatus

FIG. 14 is a schematic diagram illustrating a structure of an apparatus for controlling in-vehicle noise according to an exemplary embodiment of the present disclosure. The apparatus of this embodiment may be used to implement the embodiment of the corresponding method for controlling in-vehicle noise of the present disclosure. The apparatus shown in FIG. 14 includes an acquisition module 61, a first processing module 62, a first transmission module 63, and a second transmission module 64.

The acquisition module 61 is configured for acquiring a first excitation signal corresponding to an out-of-vehicle sound player.

The first processing module 62 is configured for determining, based on the first excitation signal and control information corresponding to an in-vehicle target position, a second excitation signal corresponding to an in-vehicle sound player.

The first transmission module 63 is configured for transmitting the first excitation signal to the out-of-vehicle sound player so that the out-of-vehicle sound player plays a first sound signal corresponding to the first excitation signal.

The second transmission module 64 is configured for transmitting the second excitation signal to the in-vehicle sound player so that the in-vehicle sound player plays a second sound signal corresponding to the second excitation signal. The control information is used for enabling a signal of the second sound signal at the in-vehicle target position to cancel at least a portion of a noise signal of the first sound signal at the target position.

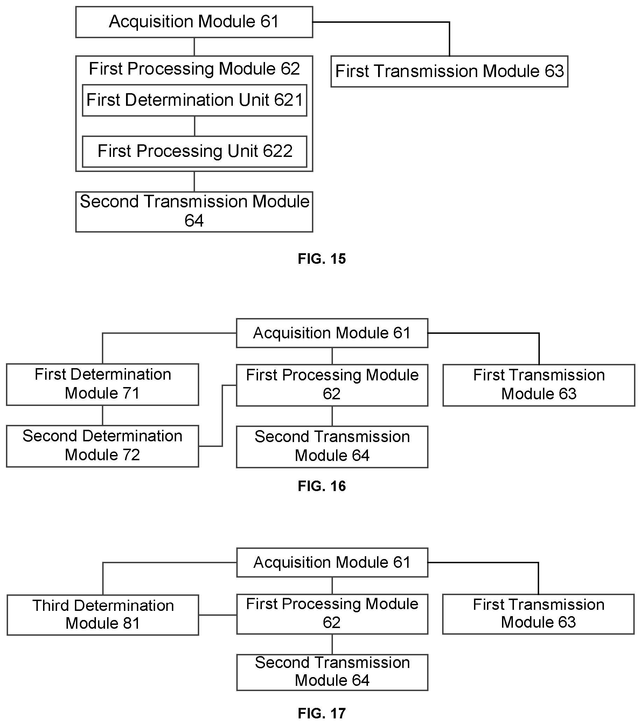

FIG. 15 is a schematic diagram illustrating a structure of an apparatus for controlling in-vehicle noise according to another exemplary embodiment of the present disclosure.

In some optional embodiments, as shown in FIG. 15, the first processing module 62 includes:

a first determination unit 621, configured for determining, based on the control information, a filter corresponding to the first excitation signal; and

a first processing unit 622, configured for performing filtering processing on the first excitation signal based on the filter to obtain the second excitation signal.

FIG. 16 is a schematic diagram illustrating a structure of an apparatus for controlling in-vehicle noise according to still another exemplary embodiment of the present disclosure.

In some optional embodiments, as shown in FIG. 16, the apparatus of the embodiments of the present disclosure further includes:

a first determination module 71, configured for acquiring position information of an in-vehicle user; and

a second determination module 72, configured for determining the target position based on the position information of the in-vehicle user.

In some optional embodiments, the first determination module 71 is specifically configured for acquiring an image captured by an in-vehicle camera; and determining the position information of the in-vehicle user based on the image.

In some optional embodiments, the first determination module 71 is specifically configured for determining the position information of the in-vehicle user based on at least one of an in-vehicle image, voice, and seat sensor data.

FIG. 17 is a schematic diagram illustrating a structure of an apparatus for controlling in-vehicle noise according to yet another exemplary embodiment of the present disclosure.

In some optional embodiments, as shown in FIG. 17, the apparatus of the embodiments of the present disclosure further includes:

a third determination module 81, configured for acquiring a target filter coefficient of a filter corresponding to the target position, the target filter coefficient being designated as the control information.

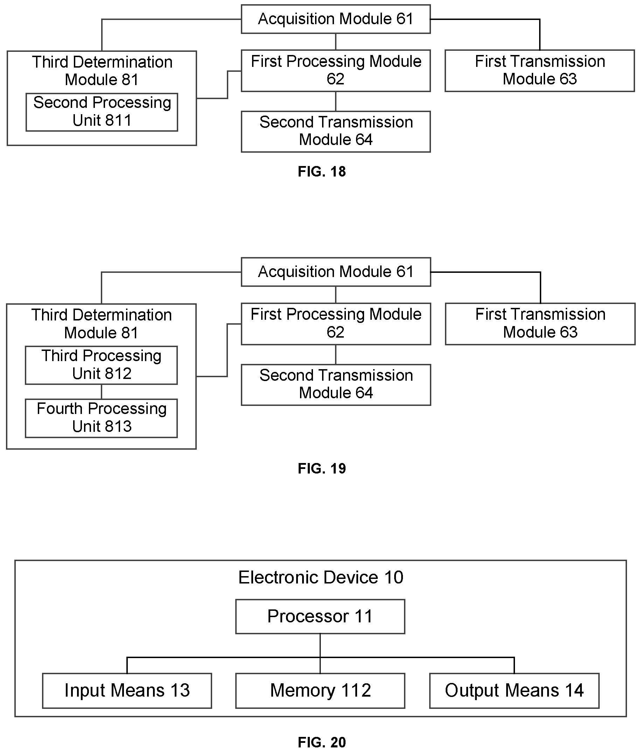

FIG. 18 is a schematic diagram illustrating a structure of an apparatus for controlling in-vehicle noise according to still another exemplary embodiment of the present disclosure.

In some optional embodiments, the third determination module 81 includes:
a second processing unit 811, configured for determining a current filter coefficient based on a previous filter coefficient of a filter, a previous reference signal, and a previous error sound signal collected by a sound sensor for the target position, that correspond to a previous time frame for the first excitation signal, the previous reference signal being obtained based on a previous excitation signal and a secondary pathway transfer function between the in-vehicle sound player and the target position, and the secondary pathway transfer function being obtained by modeling a secondary pathway between the in-vehicle sound player and the target position; and designating the current filter coefficient as the target filter coefficient.

In some optional embodiments, the second processing unit 811 is specifically configured for:
determining, by an active noise control algorithm, the current filter coefficient based on the previous filter coefficient, the previous reference signal, and the previous error sound signal.

In some optional embodiments, the second processing unit 811 is specifically configured for:
Updating, by a preset iteration rule, the previous filter coefficient based on the previous filter coefficient, the previous reference signal, and the previous error sound signal to obtain the current filter coefficient.

In some optional embodiments, the target position includes a respective sound sensor position corresponding to at least one in-vehicle user. The second processing unit 811 is specifically configured for
acquiring a previous error sound signal corresponding to each of the respective sound sensors; and determining the current filter coefficient based on the previous filter coefficient, the previous reference signal, and the previous error sound signal corresponding to each of the respective sound sensors.

FIG. 19 is a schematic diagram illustrating a structure of an apparatus for controlling in-vehicle noise according to yet another exemplary embodiment of the present disclosure.

In some optional embodiments, as shown in FIG. 19, the third determination module 81 includes:
a third processing unit 812, configured for designating a pre-obtained filter coefficient of the filter corresponding to the target position as the target filter coefficient.

In some optional embodiments, the third determination module 81 may include a second processing unit 811 and a third processing unit 812, which enables the third determination module to support both determination of a second excitation signal based on the pre-obtained fixed filter and determination of a second excitation signal based on the online adaptive filter, thereby providing a user with two noise control manners. The user may manually select a noise control manner to be specifically used, or a noise control manner to be used may be selected automatically based on a selection condition preset by the user. For example, the user may set in a manner that different noise control manners are to be used for different time periods, or different noise control manners are to be used at different vehicle speeds. For example, when the vehicle speed is higher than a particular threshold, the noise control manner based on the adaptive filter is to be used, or when the vehicle speed is lower than a particular threshold, the noise control manner based on the fixed filter is to be used. This is not specifically limited.

In some optional embodiments, the third determination module 81 further includes a fourth processing unit 813.

The fourth processing unit 813 is configured for obtaining the filter coefficient of the filter corresponding to the target position in the following manner:
acquiring a respective first reference excitation signal of at least one time frame corresponding to the out-of-vehicle sound player; determining, based on the respective first reference excitation signal and a to-be-updated filter coefficient, a second reference excitation signal of the in-vehicle sound player corresponding to the respective first reference excitation signal; acquiring, based on the respective first reference excitation signal and the second reference excitation signal corresponding to the respective first reference excitation signal, an error sound signal at the target position corresponding to the respective first reference excitation signal; and updating, by an active noise control algorithm, the to-be-updated filter coefficient based on the respective first reference excitation signal and the error sound signal corresponding to the respective first reference excitation signal to obtain the filter coefficient.

In some optional embodiments, the fourth processing unit 813 is specifically configured for:
transmitting, for a first reference excitation signal of each time frame, the first reference excitation signal to the out-of-vehicle sound player so that the out-of-vehicle sound player plays a first reference sound signal corresponding to the first reference excitation signal; transmitting the second reference excitation signal corresponding to the first reference excitation signal to the in-vehicle sound player so that the in-vehicle sound player plays a second reference sound signal corresponding to the second reference excitation signal; and collecting, based on a sound sensor for the target position, an error sound signal at the target position corresponding to the first reference sound signal and the second reference sound signal.

In some optional embodiments, the fourth processing unit 813 is specifically configured for:
converting, for a first reference excitation signal of each time frame, the first reference excitation signal into a first reference signal based on a secondary pathway transfer function between the in-vehicle sound player and the target position; and updating, by the active noise control algorithm, the to-be-updated filter coefficient based on the first reference signal and the error sound signal that correspond to the respective first reference excitation signal to obtain the filter coefficient.

The secondary pathway transfer function is obtained by modeling a secondary pathway between the in-vehicle sound player and the target position.

In some optional embodiments, there are a plurality of in-vehicle sound players. The first processing module 62 is specifically configured for

determining, based on the first excitation signal and control information corresponding to the respective in-vehicle sound players, second excitation signals corresponding to the respective in-vehicle sound players.

For beneficial technical effects corresponding to the exemplary embodiment of this apparatus, refer to the corresponding beneficial technical effects of the exemplary method section described above, which are not repeated herein.

Exemplary Electronic Device

FIG. 20 is a diagram illustrating a structure of an electronic device according to an embodiment of the present disclosure. The electronic device includes at least one processor 11 and a memory 12.

The processor 11 may be a central processing unit (CPU) or another form of processing unit having a data processing capability and/or an instruction execution capability, and may control another component in the electronic device 10 to perform a desired function.

The memory 12 may include one or more computer program products. The computer program product may include various forms of computer readable storage media, such as a volatile memory and/or a non-volatile memory. The volatile memory may include, for example, a RAM and/or a cache. The non-volatile memory may include, for example, a read-only memory (ROM), a hard disk, or a flash memory. The computer readable storage medium may store one or more computer program instructions. The processor 11 may run the one or more computer program instructions to implement the method and/or other desired functions in the foregoing embodiments of the present disclosure.

In an example, the electronic device 10 may further include an input means 13 and an output means 14. The components are interconnected through a bus system and/or other forms of connection mechanisms (not shown).

The input means 13 may further include, for example, a keyboard or a mouse.

The output means 14 may output various information to the outside, and may include, for example, a display, a speaker, a printer, and a communication network and a remote output device connected thereto.

Certainly, for simplicity, only some components in the electronic device 10 that are related to the present disclosure are shown in FIG. 20, and components such as a bus and an input/output interface are omitted. Besides, the electronic device 10 may further include any other appropriate components depending on specific applications.

Exemplary Computer Program Product And Computer Readable Storage Medium

In addition to the foregoing method and device, the embodiments of the present disclosure may also provide a computer program product including computer program instructions that, when run by a processor, cause the processor to perform the steps of the method according to the embodiments of the present disclosure that is described in the "exemplary method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the method according to the embodiments of the present disclosure that is described in the "exemplary method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

## Claims

1. A method for controlling in-vehicle noise, comprising:

   acquiring a first excitation signal corresponding to an out-of-vehicle sound player;
   determining, based on the first excitation signal and control information corresponding to an in-vehicle target position, a second excitation signal corresponding to an in-vehicle sound player;
   transmitting the first excitation signal to the out-of-vehicle sound player so that the out-of-vehicle sound player plays a first sound signal corresponding to the first excitation signal; and
   transmitting the second excitation signal to the in-vehicle sound player so that the in-vehicle sound player plays a second sound signal corresponding to the second excitation signal, the control information being used for enabling a signal of the second sound signal at the target position to cancel at least a portion of a noise signal of the first sound signal at the target position.

2. The method according to claim 1, further comprising:

   acquiring a target filter coefficient of a filter corresponding to the target position; and
   designating the target filter coefficient as the control information.

3. The method according to claim 2, wherein the acquiring a target filter coefficient of a filter corresponding to the target position comprises:

   determining a current filter coefficient based on a previous filter coefficient of a filter, a previous reference signal, and a previous error sound signal collected by a sound sensor for the target position, that correspond to a previous time frame for the first excitation signal, the previous reference signal being obtained based on a previous excitation signal and a secondary pathway transfer function between the in-vehicle sound player and the target position, and the secondary pathway transfer function being obtained by modeling a secondary pathway between the in-vehicle sound player and the target position; and
   designating the current filter coefficient as the target filter coefficient.

4. The method according to claim 3, wherein the determining a current filter coefficient based on a previous filter coefficient of a filter, a previous reference signal, and a previous error sound signal collected by a sound sensor for the target position, that correspond to a previous time frame for the first excitation signal comprises:
   determining, by an active noise control algorithm, the current filter coefficient based on the previous filter coefficient, the previous reference signal, and the previous error sound signal.

5. The method according to claim 4, wherein the determining, by an active noise control algorithm, the current filter coefficient based on the previous filter coefficient, the previous reference signal, and the previous error sound signal comprises:
   updating, by a preset iteration rule, the previous filter coefficient based on the previous filter coefficient, the previous reference signal, and the previous error sound signal to obtain the current filter coefficient.

6. The method according to claim 3, wherein the target position comprises a respective sound sensor position corresponding to at least one in-vehicle user; and
   the determining a current filter coefficient based on a previous filter coefficient of a filter, a previous reference signal, and a previous error sound signal collected by a sound sensor for the target position, that correspond to a previous time frame for the first excitation signal comprises:

acquiring a previous error sound signal corresponding to the respective sound sensor; and
determining the current filter coefficient based on the previous filter coefficient, the previous reference signal, and the previous error sound signal corresponding to the respective sound sensor.

7. The method according to claim 2, wherein the acquiring a target filter coefficient of a filter corresponding to the target position comprises:
designating a pre-obtained filter coefficient of the filter corresponding to the target position as the target filter coefficient.

8. The method according to claim 7, wherein the filter coefficient is obtained through:

acquiring a respective first reference excitation signal of at least one time frame corresponding to the out-of-vehicle sound player;
determining, based on the respective first reference excitation signal and a to-be-updated filter coefficient, a second reference excitation signal of the in-vehicle sound player corresponding to the respective first reference excitation signal;
acquiring, based on the respective first reference excitation signal and the second reference excitation signal corresponding to the respective first reference excitation signal, an error sound signal at the target position corresponding to the respective first reference excitation signal; and
updating, by an active noise control algorithm, the to-be-updated filter coefficient based on the respective first reference excitation signal and the error sound signal corresponding to the respective first reference excitation signal to obtain the filter coefficient.

9. The method according to claim 8, wherein the acquiring, based on the respective first reference excitation signal and the second reference excitation signal corresponding to the respective first reference excitation signal, an error sound signal at the target position corresponding to the respective first reference excitation signal comprises:

transmitting, for a first reference excitation signal of each time frame, the first reference excitation signal to the out-of-vehicle sound player so that the out-of-vehicle sound player plays a first reference sound signal corresponding to the first reference excitation signal;
transmitting the second reference excitation signal corresponding to the first reference excitation signal to the in-vehicle sound player so that the in-vehicle sound player plays a second reference sound signal corresponding to the second reference excitation signal; and
collecting, based on a sound sensor for the target position, an error sound signal at the target position corresponding to the first reference sound signal and the second reference sound signal.

10. The method according to claim 8, wherein the updating, by an active noise control algorithm, the to-be-updated filter coefficient based on the respective first reference excitation signal and the error sound signal corresponding to the respective first reference excitation signal to obtain the filter coefficient comprises:

converting, for a first reference excitation signal of each time frame, the first reference excitation signal into a first reference signal based on a secondary pathway transfer function between the in-vehicle sound player and the target position; and
updating, by the active noise control algorithm, the to-be-updated filter coefficient based on the first reference signal and the error sound signal that correspond to the respective first reference excitation signal to obtain the filter coefficient.

11. The method according to any one of claims 1 to 10, wherein the determining, based on the first excitation signal and control information corresponding to an in-vehicle target position, a second excitation signal corresponding to an in-vehicle sound player comprises:

determining, based on the control information, a filter corresponding to the first excitation signal; and
performing filtering processing on the first excitation signal based on the filter to obtain the second excitation signal.

12. The method according to any one of claims 1 to 10, wherein there are a plurality of in-vehicle sound players; and
the determining, based on the first excitation signal and control information corresponding to an in-vehicle target position, a second excitation signal corresponding to an in-vehicle sound player comprises:

determining, based on the first excitation signal and control information corresponding to the respective in-vehicle sound players, second excitation signals corresponding to the respective in-vehicle sound players.

13. The method according to any one of claims 1 to 10, further comprising:

   acquiring position information of an in-vehicle user; and
   determining the target position based on the position information of the in-vehicle user.

14. An apparatus for controlling in-vehicle noise, comprising:

   an acquisition module, configured for acquiring a first excitation signal corresponding to an out-of-vehicle sound player;
   a first processing module, configured for determining, based on the first excitation signal and control information corresponding to an in-vehicle target position, a second excitation signal corresponding to an in-vehicle sound player;
   a first transmission module, configured for transmitting the first excitation signal to the out-of-vehicle sound player so that the out-of-vehicle sound player plays a first sound signal corresponding to the first excitation signal; and
   a second transmission module, configured for transmitting the second excitation signal to the in-vehicle sound player so that the in-vehicle sound player plays a second sound signal corresponding to the second excitation signal, the control information being used for enabling a signal of the second sound signal at the in-vehicle target position to cancel at least a portion of a noise signal of the first sound signal at the target position.

15. A computer readable storage medium, on which a computer program is stored, wherein the computer program is used for implementing the method for controlling in-vehicle noise according to any one of claims 1 to 13.

16. An electronic device, comprising:

   a processor; and
   a memory, configured for storing instructions executable by the processor, wherein
   the processor is configured for reading the executable instructions from the memory, and executing the instructions to implement the method for controlling in-vehicle noise according to any one of claims 1 to 13.

FIG. 1

Acquiring a first excitation signal corresponding to an out-of-vehicle sound player ⌐201

Determining, based on the first excitation signal and control information corresponding to an in-vehicle target position, a second excitation signal corresponding to an in-vehicle sound player ⌐202

Transmitting the first excitation signal to the out-of-vehicle sound player so that the out-of-vehicle sound player plays a first sound signal corresponding to the first excitation signal ⌐203

Transmitting the second excitation signal to the in-vehicle sound player so that the in-vehicle sound player plays a second sound signal corresponding to the second excitation signal, the control information being used for enabling a signal of the second sound signal at the target position to cancel at least a portion of a noise signal of the first sound signal at the target position ⌐204

**FIG. 2**

Acquiring a first excitation signal corresponding to an out-of-vehicle sound player ⌐201

Determining, based on control information, a filter corresponding to the first excitation signal ⌐2021

Transmitting the first excitation signal to the out-of-vehicle sound player so that the out-of-vehicle sound player plays a first sound signal corresponding to the first excitation signal ⌐203

Performing filtering processing on the first excitation signal based on the filter to obtain a second excitation signal ⌐2022

Transmitting the second excitation signal to an in-vehicle sound player so that the in-vehicle sound player plays a second sound signal corresponding to the second excitation signal, the control information being used for enabling a signal of the second sound signal at the target position to cancel at least a portion of a noise signal of the first sound signal at the target position ⌐204

FIG. 3

FIG. 4

Acquiring a first excitation signal corresponding to an out-of-vehicle sound player    201

Acquiring position information of an in-vehicle user    301

Determining a target position based on the position information of the in-vehicle user    302

Determining, based on the first excitation signal and control information corresponding to the in-vehicle target position, a second excitation signal corresponding to an in-vehicle sound player    202

Transmitting the first excitation signal to the out-of-vehicle sound player so that the out-of-vehicle sound player plays a first sound signal corresponding to the first excitation signal    203

Transmitting the second excitation signal to the in-vehicle sound player so that the in-vehicle sound player plays a second sound signal corresponding to the second excitation signal, the control information being used for enabling a signal of the second sound signal at the target position to cancel at least a portion of a noise signal of the first sound signal at the target position    204

FIG. 5

Acquiring a first excitation signal corresponding to an out-of-vehicle sound player ⟋201

⟋401

Acquiring a target filter coefficient of a filter corresponding to a target position, the target filter coefficient being designated as control information

⟋202

Determining, based on the first excitation signal and control information corresponding to the in-vehicle target position, a second excitation signal corresponding to an in-vehicle sound player

⟋203

Transmitting the first excitation signal to the out-of-vehicle sound player so that the out-of-vehicle sound player plays a first sound signal corresponding to the first excitation signal

⟋204

Transmitting the second excitation signal to the in-vehicle sound player so that the in-vehicle sound player plays a second sound signal corresponding to the second excitation signal, the control information being used for enabling a signal of the second sound signal at the target position to cancel at least a portion of a noise signal of the first sound signal at the target position

FIG. 6

Determining a current filter coefficient based on a previous filter coefficient of a filter, a previous reference signal, and a previous error sound signal collected by a sound sensor for the target position, that correspond to a previous time frame for the first excitation signal

4011

Designating the current filter coefficient as the target filter coefficient

4012

**FIG. 7**

AVAS Speaker

Raw In-Vehicle Noise Signal

Actual In-Vehicle Noise Signal

$z($ $($

Inversion Control Signal

Error Microphone

In-Vehicle Speaker

$z($ $($

$\hat{S}(z)$

ANC

$z($ $($

**FIG. 8**

**FIG. 9**

Acquiring a respective first reference excitation signal of at least one time frame corresponding to the out-of-vehicle sound player ⌐ 501

Determining, based on the respective first reference excitation signal and a to-be-updated filter coefficient, a second reference excitation signal of the in-vehicle sound player corresponding to the respective first reference excitation signal ⌐ 502

Acquiring, based on the respective first reference excitation signal and the second reference excitation signal corresponding to the respective first reference excitation signal, an error sound signal at the target position corresponding to the respective first reference excitation signal ⌐ 503

Updating, by an active noise control algorithm, the to-be-updated filter coefficient based on the respective first reference excitation signal and the error sound signal corresponding to the respective first reference excitation signal to obtain the filter coefficient ⌐ 504

**FIG. 10**

Acquiring a respective first reference excitation signal of at least one time frame corresponding to the out-of-vehicle sound player — 501

Determining, based on the respective first reference excitation signal and a to-be-updated filter coefficient, a second reference excitation signal of the in-vehicle sound player corresponding to the respective first reference excitation signal — 502

Transmitting, for a first reference excitation signal of each time frame, the first reference excitation signal to the out-of-vehicle sound player so that the out-of-vehicle sound player plays a first reference sound signal corresponding to the first reference excitation signal — 5031

Transmitting the second reference excitation signal corresponding to the first reference excitation signal to the in-vehicle sound player so that the in-vehicle sound player plays a second reference sound signal corresponding to the second reference excitation signal — 5032

Collecting, based on a sound sensor for the target position, an error sound signal at the target position corresponding to the first reference sound signal and the second reference sound signal — 5033

Converting, for a first reference excitation signal of each time frame, the first reference excitation signal into a first reference signal based on a secondary pathway transfer function between the in-vehicle sound player and the target position — 5041

Updating, by the active noise control algorithm, the to-be-updated filter coefficient based on the first reference signal and the error sound signal that correspond to the respective first reference excitation signal to obtain the filter coefficient — 5042

FIG. 11

AVAS Speaker

Raw In-Vehicle Noise Signal

Actual In-Vehicle Noise Signal

$W$

Inversion Control Signal

In-Vehicle Speaker

Error Microphone

$\hat{S}(z)$

**FIG. 12**

AVAS Speaker

Schematic Diagram

In-Vehicle Camera

AVAS Speaker

In-Vehicle Speaker

Error Microphone

Low-Latency DSP

In-Vehicle Speaker

**FIG. 13**

| Acquisition Module 61 | |
|---|---|
| First Processing Module 62 | First Transmission Module 63 |
| Second Transmission Module 64 | |

**FIG. 14**

Acquisition Module 61

First Transmission Module 63

First Processing Module 62

First Determination Unit 621

First Processing Unit 622

Second Transmission Module 64

**FIG. 15**

Acquisition Module 61

First Determination Module 71

First Processing Module 62

First Transmission Module 63

Second Determination Module 72

Second Transmission Module 64

**FIG. 16**

Acquisition Module 61

Third Determination Module 81

First Processing Module 62

First Transmission Module 63

Second Transmission Module 64

**FIG. 17**

FIG. 18

FIG. 19

FIG. 20

## INTERNATIONAL SEARCH REPORT

| International application No. |
|---|
| **PCT/CN2024/109194** |

| A. | CLASSIFICATION OF SUBJECT MATTER |
|---|---|

G10K11/178(2006.01)i; B60R16/037(2006.01)i

According to International Patent Classification (IPC) or to both national classification and IPC

| B. | FIELDS SEARCHED |
|---|---|

Minimum documentation searched (classification system followed by classification symbols)

IPC: G10K B60R

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI; IEEE: 降噪, 第一激励信号, 目标位置, 噪声, 第二激励信号, 第一声音信号, 第二声音信号, 播放器, 车内, 车外, noise, first excitation signal, second excitation signal, vibrat+, sound player, in-vehicle, target position, sound signal

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117174063 A (SHANGHAI HONGXIGUA SEMICONDUCTOR TECHNOLOGY CO., LTD.) 05 December 2023 (2023-12-05)<br>description, paragraphs [0003]-[0252] | 1-16 |
| A | CN 113973248 A (HUAWEI TECHNOLOGIES CO., LTD.) 25 January 2022 (2022-01-25)<br>description, paragraphs [0005]-[0088] | 1-16 |
| A | CN 109346052 A (JIANGSU UNIVERSITY) 15 February 2019 (2019-02-15)<br>entire document | 1-16 |
| A | JP 2006023588 A (DENSO CORP.) 26 January 2006 (2006-01-26)<br>entire document | 1-16 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 September 2024** | **02 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/109194**

| Patent document cited in search report | | | Publication date (day/month/year) | Patent family member(s) | Publication date (day/month/year) |
|---|---|---|---|---|---|
| CN | 117174063 | A | 05 December 2023 | None | |
| CN | 113973248 | A | 25 January 2022 | None | |
| CN | 109346052 | A | 15 February 2019 | None | |
| JP | 2006023588 | A | 26 January 2006 | None | |

Form PCT/ISA/210 (patent family annex) (July 2022)

**REFERENCES CITED IN THE DESCRIPTION**

**Patent documents cited in the description**

*   CN 202311270749